# EUROPÄISCHE PATENTSCHRIFT

(11) **EP 1 693 726 B1**
(45) Veröffentlichungstag und Bekanntmachung des Hinweises auf die Patenterteilung: **29.10.2008**
(21) Anmeldenummer: 05028095.7
(22) Anmeldetag: 21.12.2005
(51) Int. Cl.: G05B 19/18, G05B 19/401

(54) **Vorrichtung und Verfahren zum Einbringen von Schwächungslinien in ein an sich steifes Bauteil**
Device and method for providing lines of weakness in a stiff element
Dispositif et méthode pour créer des lignes d'affaiblissement dans un élément rigide

(30) Priorität: 22.02.2005 DE 102005008095
(43) Veröffentlichungstag der Anmeldung: 23.08.2006
(73) Patentinhaber: GEISS Aktiengesellschaft, 96145 Sesslach (DE)
(72) Erfinder: Geiss, Manfred, 96145 Sesslach (DE)
(74) Vertreter: Reinhard - Skuhra - Weise & Partner

(56) Entgegenhaltungen:
- EP-A1- 1 459 943
- WO-A-01/70445

## Beschreibung

Die Erfindung betrifft eine Vorrichtung und ein Verfahren zum Einbringen von Schwächungslinien in ein an sich steifes, sich einer Stützform oder Aufnahme nicht formgenau anschmiegendes Bauteil, insbesondere in ein spritzgegossenes Formteil, wie eine Instrumententafel eines Automobils.

Bei Automobilen ist inzwischen der Schutz von Insassen bei einem Aufprall durch sogenannte Airbag-Systeme Standard. Dabei ist es üblich, dass vor dem Beifahrer in das Armaturenbrett bzw. die Instrumententafel eine Aussparung eingebracht wird, in die die Einrichtung für den Airbag eingebracht ist. Aus optischen Gründen ist es dabei üblich, Airbag-Einrichtungen unsichtbar anzubringen. Für den Beifahrer-Airbag wird hierzu im Bereich der die Airbag-Einrichtung tragenden Instrumententafel von der Rückseite eine Materialschwächung vorgesehen, die ausreicht, dass bei einem Unfall ein Aufreisen der Sichtfläche und damit ein Freigeben des Airbags ermöglicht wird.

Im Stand der Technik wird bereits das Einbringen von Materialschwächungen bekannt, wobei im Fall von mehrschichtig aufgebauten Instrumententafeln die oberste Haut geschwächt und die darunter liegenden Schichten der mehrteiligen Instrumententafel komplett durchbrochen werden. Falls jedoch die Instrumententafel aus einem einzigen Stück hergestellt wird, gibt es bisher keine befriedigende Lösung für das Einbringen einer notwendigen Schwächung. Versuche, bei Spritzgießverfahren hergestellten Instrumententafeln eine Schwächung bereits im Spritzgießteil vorzusehen, in dem extrem dünnwandige Bereiche eingebracht werden, sind gescheitert. Dies liegt vor allem daran, dass die geschwächten Bereiche sich zwangsläufig im Sichtbereich abzeichnen, weil die Druck- und Fließverhältnisse im Bereich extrem dünnwandiger Stellen derart unterschiedlich sind, dass Schlieren und Fließlinien die Sichtfläche unansehnlich machen.

Des Weiteren beschreibt die WO 01/70445 A1 eine Vorrichtung und ein Verfahren zum Anbringen von Schwächungslinien an einer Verkleidung eines Fahrzeug-Airbags. Dabei wird die Verkleidung mit einem Laserstrahl, welcher gleichzeitig zum Vermessen der zu bearbeitenden Fläche dient, geritzt. Während des Anbringens einer Schwächungslinie wird die Verkleidung an einer Halterung befestigt, deren Form so gewählt ist, dass die Oberfläche der Verkleidung Kontakt zu der Halterung hat.

Bisherige Versuche, in einem anschließenden Arbeitsgang eine Schwächung der im Spritzgießverfahren herstellten Instrumententafeln von der Rückseite durch Fräsen einer Nut oder eines Schlitzes vorzunehmen, führt jedoch zu keinem brauchbaren Ergebnis, da das spritzgegossene Formteil in der tragenden Stützform bzw. Auflage nicht sicher anliegt. Die zuvor erwähnte Sichtfläche der Instrumententafel legt sich als weiche, anschmiegsame Haut unter der Kraft des Luftdrucks bei einer vakuumbeaufschlagten Aufnahme sicher an die Bezugsfläche an. Bei einem steifen Spritzgussteil ist jedoch aufgrund von Eigenspannung nicht von einer sicheren Anlage auszugehen. Demgemäß scheitern die zuvor erwähnten bisher üblichen Bearbeitungsverfahren.

Im Hinblick auf Sicherheitsaspekte kommt hinzu, dass Schwächungslinien bei den Instrumententafeln mit einer geringen Toleranz einzubringen sind, damit einer sogenannte Restwanddicke erhalten bleibt. Die Restwanddicke wird derart toleriert, dass einerseits ein sicheres Ausreißen im Falle eines Unfalls stattfindet und andererseits diese Schwächung über die Lebensdauer des Fahrzeugs nicht zu einer sichtbaren Linie oder gar zu einem unbeabsichtigten Ausreißen führen kann. Demgemäß betragen übliche Restwanddicken etwa 0,5 mm und übliche Toleranzen für diese Restwanddicken liegen in der Größenordnung +/- 0,03 mm. Demgemäß kommt es für das hochpräzise Einbringen von Schwächungslinien insbesondere in einer Instrumententafel eines Automobils darauf an, dass ein exakte Kontrolle der Länge und Form des Bearbeitungswerkzeug vorgenommen wird, dass die Toleranz der beteiligten Maschinenachsen und -Baugruppen im Bezug auf das Werkzeug eingehalten wird, und dass die Lage der das Werkstück bzw. das Bauteil oder Formteil tragenden Auflage berücksichtigt wird.

Der Erfindung liegt demgemäß die Aufgabe zugrunde, eine Vorrichtung und ein Verfahren der eigens genannten Gattung verfügbar zu machen, mit der bzw. dem Schwächungslinien mit der für den industriellen Prozess nötigen Toleranz auch an den Bauteilen eingebracht werden können, die sich einer Stützform oder Aufnahme nicht anschmiegen.

Erfindungsgemäß wird diese Aufgabe durch eine Vorrichtung mit den Merkmalen des Patentanspruchs 1 gelöst, wobei bevorzugte weitere Ausgestaltungen der Vorrichtung in den nachgeordneten Patentansprüchen 2 bis 5 angegeben sind.

Verfahrenseitig wird dieser Aufgabe durch die im Patentanspruch 6 genannten Merkmale gelöst, wobei eine weitere bevorzugte Ausgestaltungen des Verfahrens in dem Patentansprüchen 7 angegeben ist.

Die Erfindung geht davon aus, dass das zu bearbeitende Bauteil grundsätzlich die Form der idealen dreidimensionalen Geometrie behalten hat, die in die Aufnahme eingearbeitet ist. Es kann jedoch nicht glatt und vollständig an die Aufnahme angelegt werden, da es aus Gründen von Erwärmung oder Schrumpftoleranz geringfügig verformt ist.

Erfindungsgemäß wird das zu bearbeitende Bauteil, welches nicht sicher an der Bezugsfläche einer Bearbeitungsaufnahme anliegt, hinsichtlich seiner tatsächlichen Lage vermessen, wozu in der Bezugfläche der Aufnahme Abstandssensoren vorgesehen sind, die/den Abstand zwischen der Bezugsfläche und den Werkstück bzw. Bauteil ausreichend genau erfassen können.

In Frage kommen dabei mechanische Sensoren, die die Oberfläche des Werkstücks bzw. des Bauteils berühren, aber auch berührungslose Sensoren, die Abstand mit Hilfe von induktiven oder kapazitiven Felder messen.

Bevorzugt wird die tatsächliche Raumlage des Werkstücks bzw. Bauteils mit drei Sensoren erfasst bzw. gemessen, die nach einer weiteren bevorzugten Ausgestaltung der Erfindung unmittelbar im Bereich der einzubringenden Schwächungslinie eingesetzt werden. Aus den gemessenen drei Koordinaten kann dann mit Hilfe einer leistungsfähigen CNC-Steuerung die tatsächliche Raumlage des Werkstücks errechnet werden, und ein Schneidprogramm für das Einbringen der Schwächungslinien kann entsprechend dieser Raumlage orientiert und abgefahren werden. Dabei wird bevorzugt eine CNC-Steuerung verwendet, die eine räumlich Drehung eines beliebigen Bearbeitungsprogramms ermöglicht.

Nach einer weiteren Ausgestaltung der Erfindung sind zur Anpassung einer Werkstückgeometrie, die im Bereich der Schwächungslinie Verformungen im dreidimensionalen Raum kompensiert, Sensoren an jedem Stützpunkt des CNC-Programms zur Teilbearbeitung angebracht, wobei das Messergebnis der jeweiligen Sensoren dann den betreffenden Stützpunkt der Bearbeitungslinie entsprechend verschiebt. Für die Bearbeitung wird bevorzugt ein stützpunktorientiertes Programm für die CNC-Steuerung eingesetzt.

Nachfolgend wird die Erfindung unter Bezugnahme auf die beigefügten Zeichnungen näher erläutert. Es zeigen:
- Figur 1:: eine schematisierte Schnittansicht durch ein auf eine Aufnahme liegendes spritzgegossenes Formteil; und
- Figur 2:: eine vergrößerte Ausschnittsdarstellung im Bereich des Abstandssensors von Figur 1.

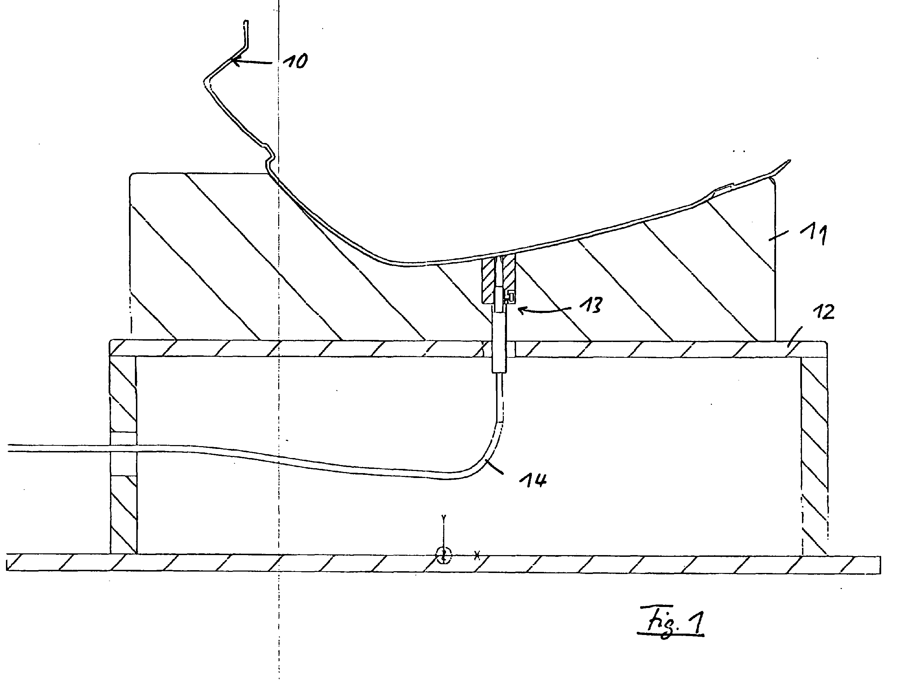

In Figur 1 ist schematisch ein Abschnitt eines Bauteils 10 dargestellt, das insbesondere aus einer spritzgegossenen Instrumententafel für Automobile besteht. Das Bauteil 10 ist auf einer Aufnahme 11 zur Bearbeitung angeordnet, wobei das Bauteil 10 jedoch nicht formgenau anliegt. Die Aufnahme 11 ist auf einem Bearbeitungstisch 12 einer nicht dargestellten CNC-Werkzeugmaschine befestigt.

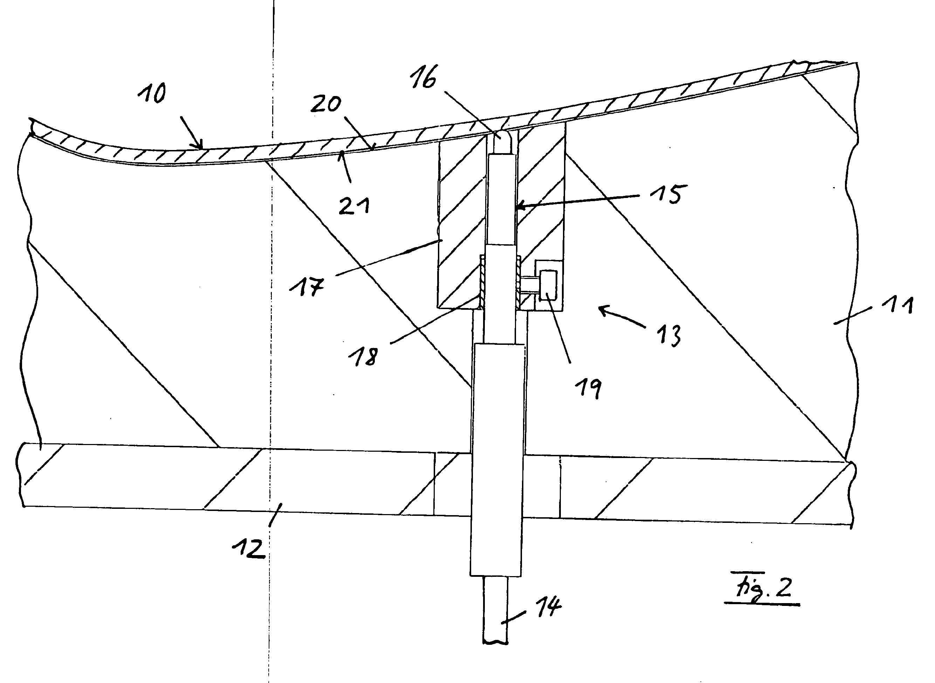

In der Aufnahme 11 ist ein mechanischer Sensor 13 angeordnet, der in Figur 2 näher dargestellt ist und der zur Messung des Abstandes zwischen der Oberfläche der Aufnahme 11 und der Unterseite des Formteils 10 im Bereich der vorgesehenen Bearbeitung zum Einbringen einer Schwächungslinie angeordnet ist. Der Abstandsensor 13 gibt über eine Signalleitung 14 ein Messsignal an die nicht dargestellte CNC-Steuerung.

Figur 2 zeigt in einer vergrößerten Darstellung den Abstandssensor 13, der als Messtaster 15 mit einer abgerundeten Kontaktspitze 16 ausgebildet und in einem Einsatz 17 in einer entsprechend ausgebildeten Bohrung der Aufnahme 11 angeordnet ist. Zur Befestigung und Justierung des Abstandssensors 13 in dem Einsatz 17 sind ein Klemmring 18 und eine Klemmschraube 19 vorgesehen.

Gemäß Figur 2 erfasst die abgerundete Spitze 16 des Abstandssensors 13 den Abstand zwischen der Oberfläche 20 der Aufnahme 11 und der Unterseite 21 des Bauteils 10, um dadurch die tatsächliche Raumlage des Bauteils zu erfassen und für die anschließende Bearbeitung zum Einbringen von Schwächungslinien zu verlagern.

## Patentansprüche

1. Vorrichtung zum Einbringen einer Schwächungslinie in ein an sich steifes, sich einer Stützform oder Aufnahme (11) nicht formgenau anschmiegendes Bauteil (10), insbesondere in ein spritzgegossenes Formteil, wie eine Instrumententafel eines Automobils, bestehend aus
- einer mehrachsigen Werkzeugmaschine und aus
- einer Stützform oder Aufnahme (11) für das zu bearbeitende Bauteil (10),
**dadurch gekennzeichnet, dass**
der Aufnahme(11) zur Erfassung der tatsächlichen Raumlage des Bauteils (10) bezüglich der Stützform oder Aufnahme (11) Abstandssensoren (13) zugeordnet sind,
und die mehrachsige Werkzeugmaschine eine für die Verarbeitung von stützpunktorientierten Programmen vorgesehenen CNC-Steuerung aufweist, wobei
die Abstandssensoren (13) dazu ausgelegt sind, die erfasste Raumlage des Bauteils (10) an die CNC-Steuerung auszugeben, und wobei
die CNC-Steuerung dazu ausgelegt ist, anhand der erfassten Raumlage des Bauteils (10) ein Schneideprogramm für das Einbringen der Schwächungslinie durch Steuern der Werkzeugmaschine durchzuführen.

2. Vorrichtung nach Anspruch 1,
**dadurch gekennzeichnet,**
**dass** die Abstandssensoren (13) im Bereich der einzubringenden Schwächungslinie angeordnet sind.

3. Vorrichtung nach Anspruch 1 oder 2,
**dadurch gekennzeichnet,**
**dass** die Abstandssensoren (13) an Stützpunkten für die CNC-Teilebearbeitung vorgesehen sind.

4. Vorrichtung nach einem der vorangehenden Ansprüche,
**dadurch gekennzeichnet,**
**dass** als Abstandssensoren (13) mechanische und/oder berührungslos arbeitende Sensoren vorgesehen sind.

5. Vorrichtung nach einem der vorangehenden Ansprüche,
**dadurch gekennzeichnet, dass** drei Abstandssensoren (13) vorgesehen sind.

6. Verfahren zum Einbringen einer Schwächungslinie in ein an sich steifes, sich einer Stützform oder Aufnahme nicht formgenau anschmiegendes Bauteil, insbesondere in ein spritzgegossenes Formteil, wie eine Instrumententafel eines Automobils,
bei dem die tatsächliche Raumlage des Bauteils im Bereich der einzubringenden Schwächungslinie bezüglich der Stützform oder Aufnahme mittels Abstandssensoren, die der Stützform oder Aufnahme zugeordnet sind, gemessen wird,
die erfasste Raumlage des Bauteils an eine CNC-Steuerung bereitgestellt wird,
und anschließend ein Schneideprogramm für das Einbringen der Schwächungslinie unter Berücksichtigung der tatsächlichen Raumlage mit Hilfe einer von der CNC-Steuerung gesteuerten mehrachsigen Werkzeugmaschine durchgeführt wird, so dass die Bearbeitungslinie entsprechend dem Messergebnis der Sensoren verschoben wird, wobei die Bearbeitung stützpunktorientiert vorgenommen wird.

7. Verfahren nach Anspruch 6,
**dadurch gekennzeichnet,**
**dass** als CNC-Steuerung eine CNC-Drehmaschine verwendet wird.

## Claims

1. A device for providing a line of weakness in a stiff element (10), whose form is not adapted accurately to a supporting mold or a receiving means (11), especially in an injection-molded part such as an instrument panel of an automobile, consisting of:
- a multi-axis machine tool, and
- a supporting mold or a receiving means (11) for the element (10) to be processed,
**characterized in that**
distance sensors (13) are assigned to the receiving means (11) for detecting the actual three-dimensional position of the element (10) with regard to the supporting mold or the receiving means (11),
and the multi-axis machine tool comprises a CNC-control for processing base-oriented programmes, wherein
the distance sensors (13) are adapted to transmit the detected three-dimensional position of the element (10) to the CNC-control, and wherein
the CNC-control is adapted to run a cutting program for the providing the line of weakness by controlling the machine tool in correspondence with the detected three-dimensional position of the element (10).

2. The device according to claim 1,
**characterized in that**
the distance sensors (13) are arranged in the region of the line of weakness to be provided.

3. The device according to claim 1 or 2,
**characterized in that**
the distance sensors (13) are provided at base points for the CNC-element-processing.

4. The device according to any of the preceding claims,
**characterized in that**
mechanically working and/or non-contact sensors are provided as distance sensors (13).

5. The device according to any of the preceding claims,
**characterized in that**
three distance sensors (13) are provided.

6. A method for providing a line of weakness in a stiff element (10), whose form is not adapted accurately to a supporting mold or a receiving means (11), especially into an injection-molded part such as an instrument panel of an automobile, wherein
the actual three-dimensional position of the element in the region of the line of weakness to be provided with respect to the supporting mold or receiving means is detected by distance sensors that are assigned to the supporting mold or the receiving means, the detected three-dimensional position of the element is provided to a CNC-control,
and subsequently a cutting program for providing the line of weakness is performed by taking into account the actual three-dimensional position by means of a multi-axis machine tool controlled by the CNC-control, so that the processing line is displaced in correspondence with the measuring result of the sensors, wherein the processing is performed in a base-oriented manner.

7. The method according to claim 6,
**characterized in that**
a CNC-lathe is used as CNC-control.

## Revendications

1. Dispositif pour créer une ligne de faiblesse dans une pièce de construction (10) rigide, n'épousant pas exactement la forme d'un support ou logement (11), notamment dans une pièce moulée par injection, par exemple un tableau de bord d'une automobile, constitué :
- d'une machine-outil à plusieurs axes, et
- d'un support ou logement (11) pour la pièce de construction (10) à usiner,
**caractérisé en ce que**
des capteurs de distance (13) sont associés au logement (11) pour la détection de la position réelle de la pièce de construction (10) par rapport au support ou logement (11),
et la machine-outil à plusieurs axes comporte une commande CNC prévue pour le traitement de programmes basés sur des points d'appui,
les capteurs de distance (13) étant conçus pour fournir la position détectée de la pièce de construction (10) à la commande CNC, et
la commande CNC étant conçue pour exécuter à l'aide de la position détectée de la pièce de construction (10) un programme de découpe pour créer la ligne de faiblesse en commandant la machine-outil.

2. Dispositif selon la revendication 1,
**caractérisé en ce que** les capteurs de distance (13) sont placés dans la zone de la ligne de faiblesse à créer.

3. Dispositif selon la revendication 1 ou 2,
**caractérisé en ce que** les capteurs de distance (13) sont prévus à des points d'appui pour l'usinage de pièces CNC.

4. Dispositif selon l'une des revendications précédentes,
**caractérisé en ce que** des capteurs mécaniques et/ou des capteurs travaillant sans contact sont prévus comme capteurs de distance (13).

5. Dispositif selon l'une des revendications précédentes,
**caractérisé en ce que** trois capteurs de distance (13) sont prévus.

6. Procédé pour créer une ligne de faiblesse dans une pièce de construction rigide, n'épousant pas exactement la forme d'un support ou logement, notamment dans une pièce moulée par injection, par exemple un tableau de bord d'une automobile,
dans lequel la position réelle de la pièce de construction dans la zone de la ligne de faiblesse à créer par rapport au support ou logement est mesurée au moyen de capteurs de distance qui sont associés au support ou logement,
dans lequel la position détectée de la pièce de construction est fournie à une commande CNC, et
dans lequel un programme de découpe est ensuite exécuté pour créer la ligne de faiblesse en tenant compte de la position réelle à l'aide d'une machine-outil à plusieurs axes commandée par la commande CNC de telle sorte que la ligne d'usinage est déplacée en fonction du résultat de mesure des capteurs, l'usinage étant effectué sur la base de points d'appui.

7. Procédé selon la revendication 6,
**caractérisé en ce qu'**un tour CNC est utilisé comme commande CNC.
